# EUROPEAN PATENT SPECIFICATION

(11) **EP 4 250 455 B1**
(45) Date of publication and mention of the grant of the patent: **11.11.2026**
(21) Application number: 22842495.8
(22) Date of filing: 14.07.2022
(51) Int. Cl.: H01M 50/251, H01M 50/204, A62C 35/58, A62C 99/00, A62C 3/16, H01M 10/48, H01M 10/613, H01M 10/627, H01M 10/6567, H01M 50/209, H01M 50/233, H01M 50/24, H01M 50/249

(54) **BATTERY RACK AND ENERGY STORAGE SYSTEM COMPRISING SAME**
BATTERIEGESTELL UND ENERGIESPEICHERSYSTEM DAMIT
BÂTI DE BATTERIE ET SYSTÈME DE STOCKAGE D'ÉNERGIE LE COMPRENANT

(30) Priority: 16.07.2021 KR 20210093531
(43) Date of publication of application: 27.09.2023
(60) Divisional application: 26208602.8
(73) Proprietor: LG Energy Solution, Ltd., Seoul 07335 (KR)
(72) Inventor: KWON, Min-Seok, Daejeon 34122 (KR)
(74) Representative: Hoffmann Eitle
(86) International application number: PCT/KR2022/010317
(87) International publication number: WO 2023/287233

(56) References cited:
- JP-A- 2021 089 811
- JP-A- 2021 089 811
- KR-A- 20170 107 792
- KR-A- 20170 121 555
- KR-A- 20210 056 268
- KR-B1- 102 031 645
- KR-B1- 102 031 645
- US-A1- 2019 319 234
- US-A1- 2021 066 768
- US-B2- 9 379 419

## Description

### TECHNICAL FIELD

The present disclosure relates to a battery rack and an energy storage system comprising the same.

### BACKGROUND ART

Due to their characteristics of being easily applicable to various products and electrical properties such as high energy density, secondary batteries are not only commonly applied to portable devices, but universally applied to electric vehicles (EVs) or hybrid electric vehicles (HEVs) that are driven by an electrical driving source. In addition to the primary advantage that it is possible to remarkably reduce the use of fossil fuels, secondary batteries do not produce by-products from the use of energy, so they are gaining attention as a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. A unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then fabricate a battery pack or a battery rack using at least one battery module with an addition of any other component. Meanwhile, an energy storage system including at least one battery rack is constructed as an energy source.

When the battery pack used in an electric vehicle is used for a predetermined period of time or below a predetermined capacity, in general, the battery pack is wasted due to the reduced driving performance of the vehicle. In general, the wasted battery pack includes cobalt oxide, lithium, manganese, nickel or the like, causing environmental pollution or dangers related to fires or electric shocks.

About 70 to 80% of the wasted battery packs from electric vehicles may be reused in other applications than the fuel source of vehicles. In particular, the waste battery packs from electric vehicles may be reused in energy storage systems (ESSs). The waste battery packs from electric vehicles for reuse are referred to as reuse battery packs.

Accordingly, there is a need for an approach to reuse the battery pack used for the predetermined period of time or below the predetermined capacity or the reuse battery pack more stably in the industrial applications such as energy storage systems. In particular, since the battery pack used for the predetermined period of time or below the predetermined capacity may have a higher fire risk caused by overheat, the design or fire prevention mechanism of a structure accommodating the battery pack, such as a battery pack frame, is emerging as the more important factor.

JP 2021 089811 A concerns a battery pack. The battery pack includes a battery comprising a plurality of battery cells and a housing that houses the battery. The housing has a height larger than the battery.

US 2019/319234 A1 concerns a lithium ion battery suppression system. A battery pack is contained within a battery module and comprises a plurality of cells. The battery module comprises a voided space.

US 2021/066768 A1 concerns a battery thermal management system with passive battery rack cooling. In a container, several battery cells are at least partially submerged within a liquid coolant.

### DISCLOSURE

### Technical Problem

The present disclosure is directed to providing a battery rack for receiving a battery pack for reuse after the use for a predetermined period of time or below a predetermined capacity more stably and ensuring safety when a fire occurs due to an abnormal situation such as overheat, and an energy storage system comprising the same.

### Technical Solution

To solve the above-described problem, the present invention provides a battery rack as defined in claim 1, including at least one battery pack used for a predetermined period of time or below a predetermined capacity; and a battery pack frame accommodating the at least one battery pack, and having a larger height than the at least one battery pack.

The battery pack frame is configured to be filled with a coolant such that the at least one battery pack is submerged in the coolant when an abnormal situation occurs in the at least one battery pack.

The at least one battery pack has at least one coolant injection hole for directly injecting the coolant into the at least one battery pack when injecting the coolant into the battery pack frame.

The coolant injection hole is provided in plural.

The plurality of coolant injection holes is disposed in each of an upper surface and a lower surface of the at least one battery pack.

The at least one battery pack may be disposed in the battery pack frame, and may be spaced a predetermined distance apart from an inner lower surface of the battery pack frame.

At least one pack support may be disposed on an inner surface of the battery pack frame to support the at least one battery pack at the predetermined distance apart from the inner lower surface of the battery pack frame.

At least one feed pipe for feeding the coolant may be disposed above the battery pack frame.

The at least one feed pipe may include at least one spring cooler to spray the coolant onto the at least one battery pack.

The battery pack frame may have at least one cable through-hole portion through which at least one cable for electrical connection to the at least one battery pack passes.

At least one cable sealing member may be mounted in the at least one cable through-hole portion to prevent a leakage of the coolant.

The battery pack may be a battery pack used in an electric vehicle or a hybrid electric vehicle.

The battery rack may include a plurality of the battery packs, and the plurality of battery packs may be stacked on top of each other along a heightwise direction of the battery rack such that they are electrically connected to each other.

Additionally, the present invention provides an energy storage system as defined in claim 10, including at least one battery rack according to the above-described embodiments.

### Advantageous Effects

According to the various embodiments as described above, it is possible to provide a battery rack for receiving a battery pack for reuse after the use for a predetermined period of time or below a predetermined capacity more stably and ensuring safety when a fire occurs due to an abnormal situation such as overheat, and an energy storage system comprising the same.

### DESCRIPTION OF DRAWINGS

The accompanying drawings illustrate an exemplary embodiment of the present disclosure and together with the following detailed description, serve to provide further understanding of the technical features of the present disclosure, and thus the present disclosure is not construed as being limited to the drawings.
FIG. 1 is a diagram illustrating a battery rack according to an embodiment of the present disclosure.
FIG. 2 is a diagram illustrating a battery pack of the battery rack of FIG. 1.
FIG. 3 is a bottom view of the battery pack of FIG. 2.
FIG. 4 is a diagram illustrating a battery pack frame of the battery rack of FIG. 1.
FIG. 5 is a diagram illustrating a support frame according to another embodiment of the battery pack frame of FIG. 4.
FIG. 6 is a diagram illustrating the main parts of the battery rack of FIG. 1.
FIGS. 7 and 8 are diagrams illustrating a coolant feed mechanism for preventing the spread of a fire in the event of an abnormal situation caused by overheat of the battery pack of the battery rack of FIG. 1.
FIGS. 9 and 10 are diagrams illustrating the mechanism for preventing the entry of coolant into an underlying battery pack below the battery pack in which an abnormal situation occurred when feeding the coolant in FIG. 7.
FIG. 11 is a diagram illustrating an energy storage system according to an embodiment of the present disclosure.

### BEST MODE

The present disclosure will become apparent by describing exemplary embodiments of the present disclosure in detail with reference to the accompanying drawings. The disclosed embodiments are provided by way of illustration to help the understanding of the present disclosure, and it should be understood that the present disclosure may be embodied in many other forms within the scope of the appended claims. Additionally, to help the understanding of the present disclosure, some elements in the accompanying drawings may be depicted on an exaggerated scale, not the actual scale.

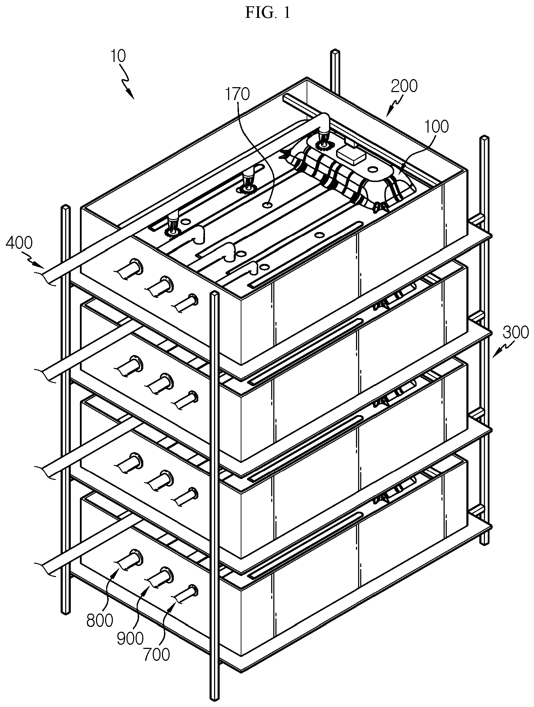

FIG. 1 is a diagram illustrating a battery rack according to an embodiment of the present disclosure.

Referring to FIG. 1, the battery rack 10 includes at least one battery pack 100 and at least one battery pack frame 200 accommodating the at least one battery pack 100.

The at least one battery pack 100 is a battery pack used for a predetermined period of time or below a predetermined capacity. Specifically, the at least one battery pack 100 may be a battery pack used in an electric vehicle or a hybrid electric vehicle. The at least one battery pack may be referred to as a reuse battery pack.

One or more battery packs 100 may be included. Hereinafter, this embodiment is described based on the plurality of battery packs 100.

Hereinafter, the battery pack 100 will be described in more detail.

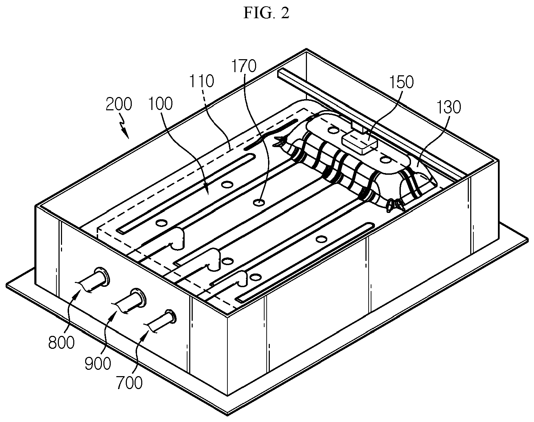

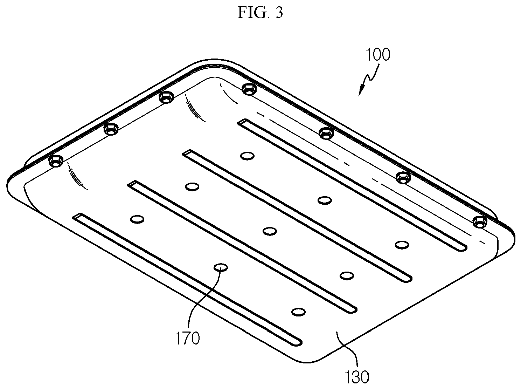

FIG. 2 is a diagram illustrating the battery pack of the battery rack of FIG. 1, and FIG. 3 is a bottom view of the battery pack of FIG. 2.

Referring to FIGS. 2 and 3 together with FIG. 1, the battery pack 100 may include a battery cell 110, a pack case 130 and a service plug 150.

The battery cell 110 may include a secondary battery, for example, a pouch type secondary battery, a prismatic secondary battery or a cylindrical secondary battery. Hereinafter, this embodiment is described by taking a secondary battery, to be exact, a pouch type secondary battery, as an example of the battery cell 110.

One or more battery cells 110 may be included. Hereinafter, this embodiment is described based on the plurality of battery cells 110 electrically connected to each other to form a battery cell assembly.

The pack case 130 may accommodate the plurality of battery cells 110 and different types of electrical components and a cooling unit of the battery pack 100. To this end, the pack case 130 may have an accommodation space in which the components of the battery pack 100 are received.

The service plug 150 is configured to disconnect the electrical connection of the battery pack 100 by the user manipulation to prevent electric shock accidents in the operator's inspection or management of the battery pack 100, and may be mounted in the pack case 130 and electrically connected to the battery cells 110 or the electrical components of the battery pack 100. Specifically, the service plug 150 may be disposed on the pack case 130 to allow the user or the operator to easily manipulate.

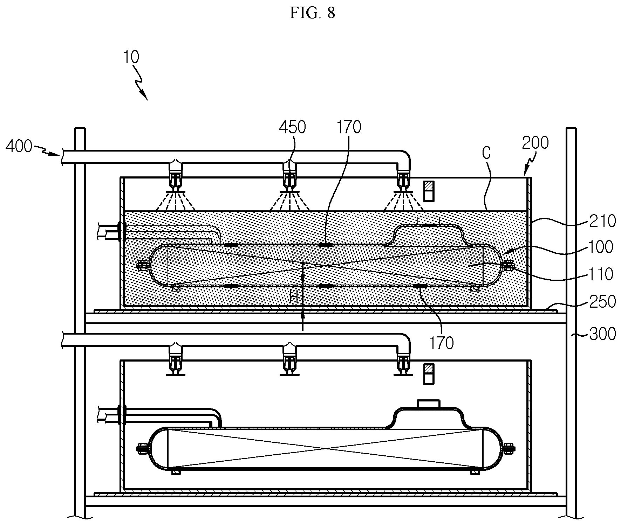

Meanwhile, the battery pack 100 has at least one coolant injection hole 170 for directly injecting a coolant C (see FIG. 8) into the at least one battery pack 100 when injecting the coolant into the battery pack frame 200.

In particular, a plurality of coolant injection holes 170 are included. The plurality of coolant injection holes 170 may be disposed in at least one of the upper surface or the lower surface of the battery pack 100, to be specific, the pack case 130.

In this embodiment and in accordance with the claimed invention, to maximize the injection efficacy of the coolant C (see FIG. 8), the plurality of coolant injection holes 170 are disposed in each of the upper surface and the lower surface of the battery pack 100, to be specific, the pack case 130. More specifically, the battery pack 100 may be disposed in the battery pack frame 200, and may be spaced a predetermined distance apart from the inner lower surface of the battery pack frame 200 to smoothly feed the coolant C (see FIG. 8) into the battery pack 100 from the bottom of the battery pack 100.

The at least one battery pack frame 200 accommodates the at least one battery pack 100 used for the predetermined period of time or below the predetermined capacity, and has a larger height than the at least one battery pack 100.

When an abnormal situation occurs due to overheat of the at least one battery pack 100, the at least one battery pack frame 200 is filled with the coolant C (see FIG. 8) such that a predetermined height of the at least one battery pack 100 is submerged in the coolant C.

The at least one battery pack frame 200 may receive the at least one battery pack 100 used for the predetermined period of time or below the predetermined capacity more stably and control a dangerous situation such as a fire more quickly through the coolant C filled inside when the dangerous situation such as the fire occurs due to the abnormal situation caused by the overheat of the at least one battery pack 100.

A plurality of battery pack frame 200 may be included, and the plurality of battery pack frames 200 may be stacked on top of each other along the heightwise direction of the battery rack 10.

Hereinafter, the at least one battery pack frame 200 will be described in more detail.

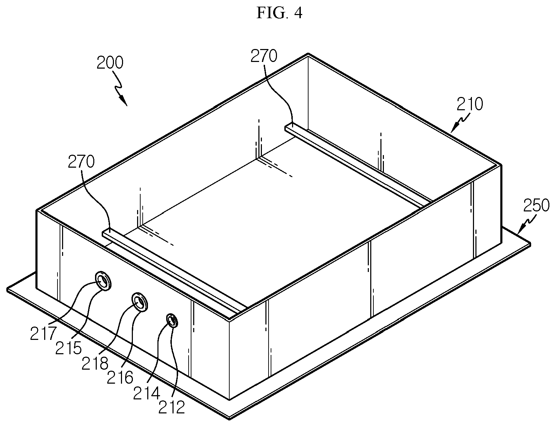

FIG. 4 is a diagram illustrating the battery pack frame of the battery rack of FIG. 1.

Referring to FIG. 4, the battery pack frame 200 may have an accommodation space which is exposed to top, and the at least one battery pack 100 may be received in the accommodation space.

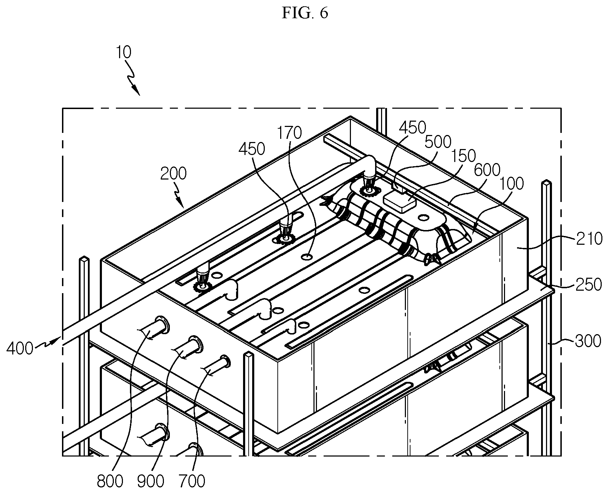

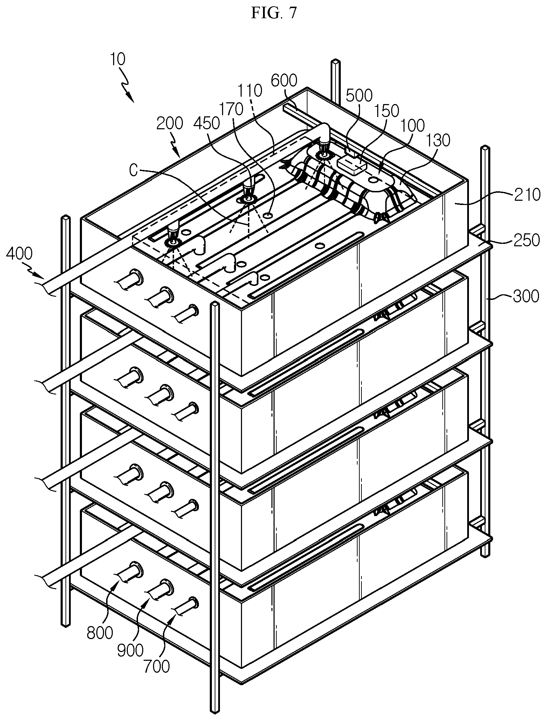

At least one feed pipe 400 (see FIG. 6) for feeding the coolant C (see FIG. 7) may be disposed above the battery pack frame 200. The at least one feed pipe 400 will be described in more detail below.

Additionally, at least one smoke detection sensor 500 (see FIG. 6) may be disposed at the upper part of the battery pack frame 200 to detect smoke when the abnormal situation occurs due to overheat of the at least one battery pack 100. The at least one smoke detection sensor 500 will be described in more detail below.

Furthermore, a sensor support 600 on which the at least one smoke detection sensor 500 (see FIG. 6) may be disposed at the upper part of the battery pack frame 200 to support the at least one smoke detection sensor 500. The sensor support 600 will be described in more detail below.

The battery pack frame 200 may include a water tank frame 210 and a support frame 250.

The water tank frame 210 may have an accommodation space which is exposed to top, for receiving the at least one battery pack 100, and the accommodation space may be filled with the coolant C (see FIG. 8).

The water tank frame 210 may include at least one cable through-hole portion 212, at least one cable sealing member 214, a cooling inlet through-hole portion 215, a cooling outlet through-hole portion 216, an inlet sealing member 217 and an outlet sealing member 218.

The at least one cable through-hole portion 212 may be disposed on one side of the battery pack frame 200, to be specific, one side of the water tank frame 210, and may allow at least one cable 700 for electrical connection to the at least one battery pack 100 to pass through.

The at least one cable sealing member 214 is configured to prevent the leakage of the coolant C through the at least one cable through-hole portion 212, and may be mounted in the at least one cable through-hole portion 212.

The at least one cable sealing member 214 may be mounted in the at least one cable through-hole portion 212. When the water tank frame 210 is filled with the coolant C (see FIG. 8), the at least one cable sealing member 214 may prevent the leakage of the coolant C from the water tank frame 210 through the cable through-hole portion 212.

The cooling inlet through-hole portion 215 may be disposed on one side of the battery pack frame 200, to be specific, one side of the water tank frame 210, and may allow a cooling inlet 800 for cooling of the battery pack 100 to pass through.

The cooling outlet through-hole portion 216 may be disposed on one side of the battery pack frame 200, to be specific, one side of the water tank frame 210, and may allow a cooling outlet 900 for cooling of the battery pack 100 to pass through.

The inlet sealing member 217 may be mounted in the cooling inlet through-hole portion 215. When the water tank frame 210 is filled with the coolant C (see FIG. 8), the inlet sealing member 217 may prevent the leakage of the coolant C from the water tank frame 210 through the cooling inlet through-hole portion 215.

The outlet sealing member 218 may be mounted in the cooling outlet through-hole portion 216. When the water tank frame 210 is filled with the coolant C (see FIG. 8), the outlet sealing member 218 may prevent the leakage of the coolant C from the water tank frame 210 through the cooling outlet through-hole portion 216.

The support frame 250 may be disposed below the water tank frame 210, and its edge may extend outward from the bottom edge of the water tank frame 210. That is, the support frame 250 may have a wider area than the bottom area of the water tank frame 210.

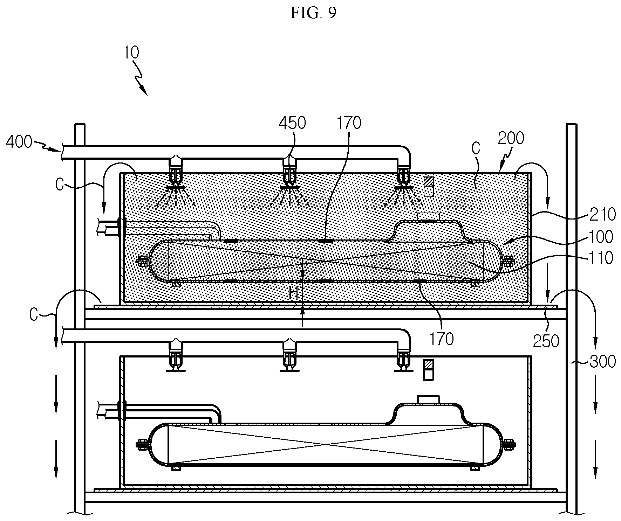

The support frame 250 may ensure the strength of the battery pack frame 200. Furthermore, the support frame 250 may prevent the entry of the coolant C into the water tank frame 210 of the adjacent battery pack frame 200 when the coolant C (see FIG. 9) flows over the water tank frame 210.

Furthermore, at least one pack support 270 may be disposed on the inner surface of the battery pack frame 200 to support the battery pack 100 at a predetermined distance H (see FIG. 8) apart from the inner lower surface of the battery pack frame 200, that is, the bottom surface of the water tank frame 210. This embodiment is described based on a pair of pack supports 270.

The pair of pack supports 270 places the bottom surface of the battery pack 100 at the predetermined height H (see FIG. 8) apart from the inner lower surface of the battery pack frame 200, that is, the bottom surface of the water tank frame 210 when the battery pack 100 is received in the battery pack frame 200, to guide the effective injection of the coolant C (see FIG. 8) into the battery pack 100 from the bottom surface of the battery pack 100.

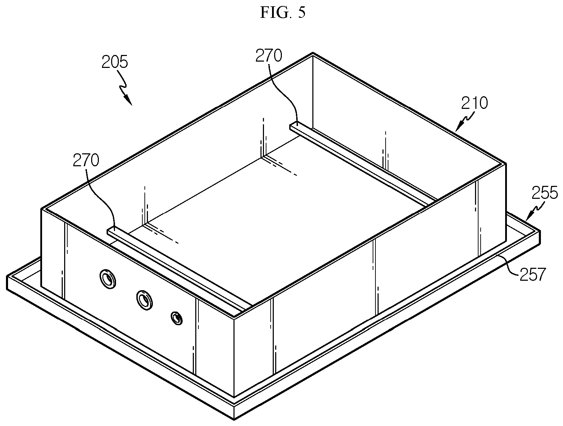

FIG. 5 is a diagram illustrating a support frame according to another embodiment of the battery pack frame of FIG. 4.

Referring to FIG. 5, the battery pack frame 205 may include a water tank frame 210 and a support frame 255.

The water tank frame 210 is substantially identical or similar to the previous embodiment, and an overlapping description is omitted.

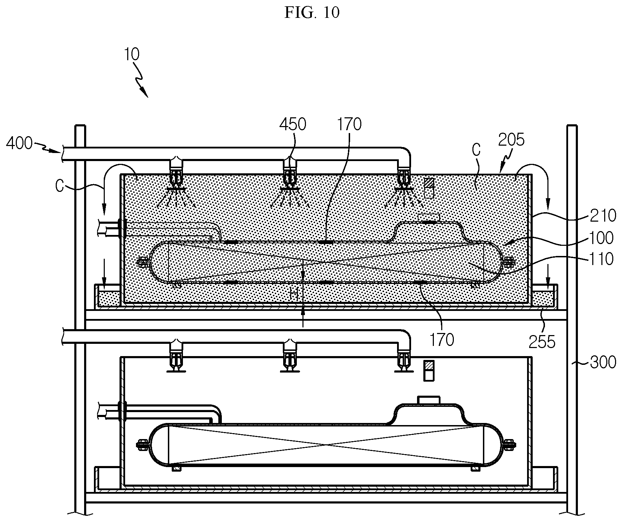

The support frame 255 may have a step portion 257 having a predetermined height at its edge to prevent the coolant C from flowing down when the coolant C (see FIG. 10) leaks from the water tank frame 210.

Through the step portion 257, an additional coolant accommodation space may be formed at the edge of the support frame 255 to further accommodate the coolant C to the predetermined height. Furthermore, a drain pipe may be connected to one side of the additional coolant accommodation space at the edge of the support frame 255 to drain the coolant C.

Hereinafter, the other main components of the battery rack 10 will be described in more detail.

FIG. 6 is a diagram illustrating the main parts of the battery rack of FIG. 1.

Referring to FIG. 6, the battery rack 10 may further include a rack frame 300, the feed pipe 400, the smoke detection sensor 500, the sensor support 600, the at least one cable 700, the cooling inlet 800 and the cooling outlet 900.

The rack frame 300 may support the plurality of battery pack frames 200 and guide the vertical stack of the plurality of battery pack frames 200.

A plurality of feed pipes 400 may be included, and may be disposed above each battery pack frame 200. The feed pipes 400 may be connected to a coolant tank (not shown) outside of the battery rack 10.

Each feed pipe 400 may include at least one spring cooler 450 to spray the coolant C (see FIG. 7) onto the at least one battery pack 100.

The at least one spring cooler 450 may disposed above the battery pack 100 above the battery pack frame 200. One or more spring coolers 450 may be included. Hereinafter, this embodiment is described based on the plurality of spring coolers 450.

The smoke detection sensor 500 may detect smoke coming out of the battery pack 100 to detect a fire when the fire occurred due to overheat of the battery pack 100.

The smoke detection sensor 500 may be disposed above the service plug 150 of the battery pack 100 where smoke is highly likely to first come out of the battery pack 100.

The sensor support 600 is configured to support the smoke detection sensor 500 more stably, and may have a bar shape having a predetermined length and may be mounted in the water tank frame 210 of the battery pack frame 200.

The at least one cable 700 is used to connect the electrical components inside of the battery pack 100 to an external electrical unit, and may be connected to the battery pack 100.

The at least one cable 700 may be connected to the battery pack 100 in the water tank frame 210 through the cable through-hole portion 212 of the water tank frame 210 of the battery pack frame 200.

The at least one cable 700 may have a waterproof sealing coating on the outer surface to prevent an electrical short when the water tank frame 210 is filled with the coolant C (see FIG. 8).

The cooling inlet 800 is used to cool the battery pack 100, and may connect an external cooling unit to the battery pack 100. The cooling inlet 800 may be connected to the battery pack 100 in the water tank frame 210 through the cooling inlet through-hole portion 215 of the water tank frame 210.

The cooling outlet 900 is used to cool the battery pack 100, and may connect the external cooling unit to the battery pack 100. The cooling outlet 900 may be connected to the battery pack 100 in the water tank frame 210 through the cooling outlet through-hole portion 216 of the water tank frame 210.

Hereinafter, the mechanism for preventing the spread of the fire in the event of the abnormal situation caused by overheat of the battery pack 100 of the battery rack 10 according to this embodiment will be described in more detail.

FIGS. 7 and 8 are diagrams illustrating the coolant feed mechanism for preventing the spread of the fire in the event of the abnormal situation caused by overheat of the battery pack of the battery rack of FIG. 1.

Referring to FIGS. 7 and 8, in the battery rack 10, the abnormal situation may occur in at least one specific battery pack 100. Since the battery pack 100 is the reuse battery pack 100 used for the predetermined period of time or below the predetermined capacity, the abnormal situation may occur due to overheat, causing a fire.

**In** this embodiment, when the fire occurs due to the abnormal situation caused by overheat of the specific battery pack 100, for example, the topmost battery pack 100 of the battery rack 10, it is possible to put out the fire in the specific battery pack 100 more quickly and prevent the spread of heat to the adjacent battery pack 100 more quickly.

Specifically, in the abnormal situation, when the battery pack 100 is overheated and smoke or flames occur, the smoke detection sensor 500 may detect the smoke, thereby detecting the abnormal situation quickly. When the smoke is detected by the smoke detection sensor 500, the coolant C may be quickly sprayed onto the battery pack 100 in which the abnormal situation occurred from the spring coolers 450 of the feed pipe 400 above the battery pack 100 in which the abnormal situation occurred.

The spray of the coolant C through the spring coolers 450 may continue until the battery pack 100 is submerged in the coolant C in the water tank frame 210 of the battery pack frame 200 to completely put out the fire in the battery pack 100.

When spraying the coolant C, in this embodiment, the coolant C may be directly fed into the pack case 130 of the battery pack 100 through the plurality of coolant injection holes 170. Accordingly, in this embodiment, since the coolant C is directly injected into the battery pack 100 in which the abnormal situation occurred, it is possible to put out the fire in the battery pack 100 in which the abnormal situation occurred more quickly.

Furthermore, since the bottom of the battery pack 100 is spaced the predetermined height H apart from the battery pack frame 200, it is possible to feed the coolant C into the pack case 130 more effectively through the coolant injection holes 170 on the bottom of the battery pack 100.

FIGS. 9 and 10 are diagrams illustrating the mechanism for preventing the entry of the coolant into the underlying battery pack below the battery pack in which the abnormal situation occurred when feeding the coolant in FIG. 8.

Referring to FIG. 9, during the spray of the coolant C through the spring coolers 450, the coolant C may flow over the water tank frame 210 of the battery pack frame 200.

In this embodiment, since the support frame 250 of the battery pack frame 200 extends outward from the water tank frame 210, it is possible to prevent the coolant C from entering the adjacent battery pack 100, to be specific, the underlying battery pack 100 when the coolant C flows over the water tank frame 210.

Accordingly, in this embodiment, through the support frame 250, it is possible to effectively prevent damage caused by the coolant C to the other battery pack 100 in which the fire did not occur.

Referring to FIG. 10, in case that the support frame 255 of the battery pack frame 205 has the step portion 257, the coolant C may be further held in the internal space formed by the step portion 257 when that the coolant C flows over the water tank frame 210.

Accordingly, since the coolant C is further held in the internal space through the step portion 257 to the predetermined height when the coolant C flows over the water tank frame 210, it is possible to further delay the time when the overflowing coolant C pours down. Furthermore, it is possible to prevent the coolant C from flowing down more effectively by stopping the spray of the coolant C from the spring coolers 450 for the delayed time.

Here, an additional drain pipe may be connected to the internal space formed by the step portion 257, and in this instance, the coolant C may exit through the additional drain pipe, so it is possible to prevent the entry of the coolant C into the underlying battery pack 100 more effectively.

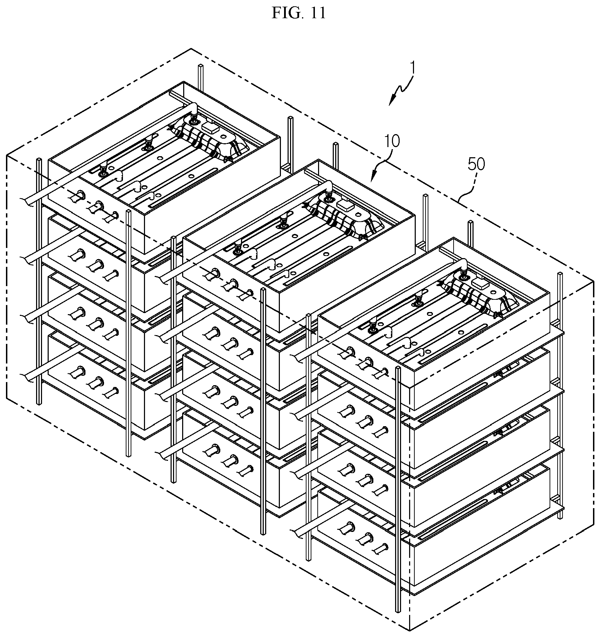

FIG. 11 is a diagram illustrating an energy storage system according to an embodiment of the present disclosure.

The energy storage system 1 may include at least one battery rack 10 of the previous embodiment and a rack container 50 accommodating the at least one battery rack 10.

One or more battery racks 10 may be included. Hereinafter, this embodiment is described based on the plurality of battery racks 10.

Furthermore, the plurality of battery racks 10 may include a combination of the battery racks 10 including the battery packs 100 used for the predetermined period of time or below the predetermined capacity and battery racks including the general battery packs.

The rack container 50 may be configured to accommodate the plurality of battery racks 10, and may have an accommodation space in which the plurality of battery racks 10 is received.

As described above, the energy storage system 1 according to this embodiment may include the battery packs 100 (see FIG. 1) used for the predetermined period of time or below the predetermined capacity or the battery packs 100 used in electric vehicles or hybrid electric vehicles.

As described above, since the energy storage system 1 according to this embodiment includes the battery packs 100 used in vehicles that are usually discarded after wasted, it is possible to achieve cost savings associated with resource recycling and solve the environmental pollution problem caused by the wasted battery packs 100.

According to the above-described various embodiments, it is possible to provide the battery rack 200 for receiving the battery pack 100 for reuse after the use for the predetermined period of time or below the predetermined capacity more stably and ensuring safety when a fire occurs due to an abnormal situation such as overheat, and the energy storage system 1 including the same.

While an exemplary embodiment of the present invention has been hereinabove illustrated and described, the present invention is not limited to the above-described particular embodiment and it is obvious to those skilled in the art that a variety of modifications and changes may be made thereto within the scope of the appended claims.

## Claims

1. A battery rack (10), comprising:
at least one battery pack (100) used for a predetermined period of time or below a predetermined capacity; and
a battery pack frame (200) accommodating the at least one battery pack (100), and having a larger height than the at least one battery pack (100),
wherein the battery pack frame (200) is configured to be filled with a coolant (C) such that the at least one battery pack (100) is submerged in the coolant (C) when an abnormal situation occurs in the at least one battery pack (100),
wherein the at least one battery pack (100) has at least one coolant injection hole (170) for directly injecting the coolant (C) into the at least one battery pack (100) when injecting the coolant (C) into the battery pack frame (200),
wherein the coolant injection hole (170) is provided in plural, **characterized in that**
the plurality of coolant injection holes (170) is disposed in each of an upper surface and a lower surface of the at least one battery pack (100).

2. The battery rack (10) according to claim 1, wherein the at least one battery pack (100) is disposed in the battery pack frame (200), and is spaced a predetermined distance (H) apart from an inner lower surface of the battery pack frame (200).

3. The battery rack (10) according to claim 2, wherein at least one pack support (270) is disposed on an inner surface of the battery pack frame (200) to support the at least one battery pack (100) at the predetermined distance (H) apart from the inner lower surface of the battery pack frame (200).

4. The battery rack (10) according to claim 1, wherein at least one feed pipe (400) for feeding the coolant is disposed above the battery pack frame (200).

5. The battery rack (10) according to claim 4, wherein the at least one feed pipe (400) includes at least one spring cooler (450) to spray the coolant onto the at least one battery pack (100).

6. The battery rack (10) according to claim 1, wherein the battery pack frame (200) has at least one cable through-hole portion (212) through which at least one cable (700) for electrical connection to the at least one battery pack (100) passes.

7. The battery rack (10) according to claim 6, wherein at least one cable sealing member (214) is mounted in the at least one cable through-hole portion (212) to prevent a leakage of the coolant.

8. The battery rack (10) according to claim 1, wherein the battery pack (100) is a battery pack (100) used in an electric vehicle or a hybrid electric vehicle.

9. The battery rack (10) according to claim 1, wherein the battery rack (10) comprises a plurality of the battery packs (100),
wherein the plurality of battery packs (100) is stacked on top of each other along a heightwise direction of the battery rack (10) such that they are electrically connected to each other.

10. An energy storage system (1) comprising at least one battery rack (10) according to claim 1.

## Patentansprüche

1. Batteriegestell (10), umfassend:
mindestens ein Batteriepack (100), das einen vorbestimmten Zeitraum lang oder unter einer vorbestimmten Kapazität verwendet wird; und
einen Batteriepackrahmen (200), der das mindestens eine Batteriepack (100) aufnimmt und eine größere Höhe als das mindestens eine Batteriepack (100) aufweist,
wobei der Batteriepackrahmen (200) ausgebildet ist, um mit einem Kühlmittel (C) gefüllt zu sein, sodass das mindestens eine Batteriepack (100) in das Kühlmittel (C) eingetaucht ist, wenn eine abnormale Situation in dem mindestens einen Batteriepack (100) auftritt,
wobei das mindestens eine Batteriepack (100) mindestens ein Kühlmitteleinspritzloch (170) zum direkten Einspritzen des Kühlmittels (C) in das mindestens eine Batteriepack (100) bei dem Einspritzen des Kühlmittels (C) in den Batteriepackrahmen (200) aufweist, **dadurch gekennzeichnet, dass**
wobei das Kühlmitteleinspritzloch (170) in Mehrzahl bereitgestellt ist, wobei die Vielzahl von Kühlmitteleinspritzlöchern (170) in jeder von einer oberen Oberfläche und einer unteren Oberfläche des mindestens einen Batteriepacks (100) angeordnet ist.

2. Batteriegestell (10) nach Anspruch 1, wobei das mindestens eine Batteriepack (100) im Batteriepackrahmen (200) angeordnet ist und in einem vorbestimmten Abstand (H) von einer inneren unteren Oberfläche des Batteriepackrahmens (200) beabstandet ist.

3. Batteriegestell (10) nach Anspruch 2, wobei mindestens eine Packstütze (270) auf einer Innenfläche des Batteriepackrahmens (200) angeordnet ist, um das mindestens eine Batteriepack (100) in dem vorbestimmten Abstand (H) von der Innenunterfläche des Batteriepackrahmens (200) zu stützen.

4. Batteriegestell (10) nach Anspruch 1, wobei mindestens ein Zuführrohr (400) zum Zuführen des Kühlmittels oberhalb des Batteriepackrahmens (200) angeordnet ist.

5. Batteriegestell (10) nach Anspruch 4, wobei das mindestens eine Zuführrohr (400) mindestens einen Federkühler (450) einschließt, um das Kühlmittel auf das mindestens eine Batteriepack (100) zu sprühen.

6. Batteriegestell (10) nach Anspruch 1, wobei der Batteriepackrahmen (200) mindestens einen Kabeldurchgangslochabschnitt (212) aufweist, durch den mindestens ein Kabel (700) zu der elektrischen Verbindung mit dem mindestens einen Batteriepack (100) hindurchgeht.

7. Batteriegestell (10) nach Anspruch 6, wobei mindestens ein Kabeldichtungselement (214) in dem mindestens einen Kabeldurchgangslochabschnitt (212) montiert ist, um ein Auslaufen des Kühlmittels zu verhindern.

8. Batteriegestell (10) nach Anspruch 1, wobei das Batteriepack (100) ein Batteriepack (100) ist, das in einem Elektrofahrzeug oder einem Hybrid-Elektrofahrzeug verwendet wird.

9. Batteriegestell (10) nach Anspruch 1, wobei das Batteriegestell (10) eine Vielzahl der Batteriepacks (100) umfasst,
wobei die Vielzahl von Batteriepacks (100) in einer Höhenrichtung des Batteriegestells (10) aufeinander gestapelt sind, sodass sie elektrisch miteinander verbunden sind.

10. Energiespeichersystem (1), umfassend mindestens ein Batteriegestell (10) nach Anspruch 1.

## Revendications

1. Bâti (10) de batterie, comprenant :
au moins un bloc-batterie (100) utilisé pendant une période prédéterminée ou en dessous d'une capacité prédéterminée ; et
un cadre (200) de bloc-batterie recevant l'au moins un bloc-batterie (100), et présentant une hauteur plus grande que l'au moins un bloc-batterie (100),
dans lequel le cadre (200) de bloc-batterie est configuré pour être rempli de réfrigérant (C) de telle sorte que l'au moins un bloc-batterie (100) soit submergé dans le réfrigérant (C) lorsqu'une situation anormale se produit dans l'au moins un bloc-batterie (100),
dans lequel l'au moins un bloc-batterie (100) présente au moins un trou (170) d'injection de réfrigérant pour injecter directement le réfrigérant (C) dans l'au moins un bloc-batterie (100) lors de l'injection du réfrigérant (C) dans le cadre (200) de bloc-batterie, **caractérisé en ce que**
dans lequel le trou (170) d'injection de réfrigérant est prévu en une pluralité, la pluralité de trous (170) d'injection de réfrigérant se situent sur chacune d'une surface supérieure et d'une surface inférieure de l'au moins un bloc-batterie (100).

2. Bâti (10) de batterie selon la revendication 1, dans lequel l'au moins un bloc-batterie (100) est disposé dans le cadre (200) de bloc-batterie, et est espacé d'une distance prédéterminée (H) d'une surface inférieure interne du cadre (200) de bloc-batterie.

3. Bâti (10) de batterie selon la revendication 2, dans lequel au moins un support (270) de bloc est disposé sur une surface interne du cadre (200) de bloc-batterie pour supporter l'au moins un bloc-batterie (100) à la distance prédéterminée (H) de la surface inférieure interne du cadre (200) de bloc-batterie.

4. Bâti (10) de batterie selon la revendication 1, dans lequel au moins un tuyau d'alimentation (400) pour alimenter le réfrigérant est disposé au-dessus du cadre (200) de bloc-batterie.

5. Bâti (10) de batterie selon la revendication 4, dans lequel l'au moins un tuyau d'alimentation (400) inclut au moins un refroidisseur à jet (450) pour pulvériser le réfrigérant sur l'au moins un bloc-batterie (100).

6. Bâti (10) de batterie selon la revendication 1, dans lequel le cadre (200) de bloc-batterie présente au moins une partie trou traversant (212) de câble à travers laquelle passe au moins un câble (700) pour une connexion électrique à l'au moins un bloc-batterie (100).

7. Bâti (10) de batterie selon la revendication 6, dans lequel au moins un organe (214) d'étanchéité de câble est monté dans l'au moins une partie trou traversant (212) de câble pour empêcher une fuite du réfrigérant.

8. Bâti (10) de batterie selon la revendication 1, dans lequel le bloc-batterie (100) est un bloc-batterie (100) utilisé dans un véhicule électrique ou un véhicule électrique hybride.

9. Bâti (10) de batterie selon la revendication 1, dans lequel le bâti (10) de batterie comprend une pluralité des blocs-batteries (100),
dans lequel la pluralité de blocs-batteries (100) sont empilés les uns sur les autres le long d'une direction de hauteur du bâti (10) de batterie de sorte qu'ils soient électriquement connectés entre eux.

10. Système (1) de stockage d'énergie comprenant au moins un bâti (10) de batterie selon la revendication 1.
